# EUROPÄISCHE PATENTANMELDUNG

(11) **EP 1 525 944 A1**
(43) Veröffentlichungstag der Anmeldung: **27.04.2005**
(21) Anmeldenummer: 04022514.6
(22) Anmeldetag: 22.09.2004
(51) Int. Cl.: B23Q 5/04, B23Q 1/76, B23Q 1/01

(54) **Mittenantriebs-Drehmaschine**

(30) Priorität: 21.10.2003 DE 10349437
(71) Anmelder: Werkzeugmaschinenbau Sinsheim GmbH, 74889 Sinsheim (DE)
(72) Erfinder: Hoffmann, Hans-Otto, 74889 Sinsheim (DE); Tunkel, Franz, 35394 Giessen (DE)
(74) Vertreter: Seewald, Jürgen, Dipl.-Ing.

(57) **Zusammenfassung**

Die vorliegende Erfindung betrifft eine Mittenantriebs-Drehmaschine mit mindestens einem Mittenantriebskopf und mindestens einem Kreuzschlitten, wobei der mindestens eine Mittenantriebskopf und der mindestens eine Kreuzschlitten auf zueinander parallelen, auf einem Maschinenbett angeordneten Führungsbahnen verfahrbar sind. Aufgabe der Erfindung ist es, eine Mittenantriebs-Drehmaschine zur Verfügung zu stellen, die ein manuelles Be- und Entladen mit Werkstücken gestattet und somit für den Einsatz im Klein- und Mittel-Serienbereich geeignet ist. Gelöst wird diese Aufgabe dadurch, dass das Maschinenbett (3) vertikal angeordnet ist, wobei auf einer oberen Führungsbahn (8) der mindestens eine Kreuzschlitten (9, 10) und auf einer unteren Führungsbahn (7) der mindestens eine Mittenantriebskopf (16, 32) verfahrbar ist.

## Beschreibung

Die vorliegende Erfindung betrifft eine Mittenantriebs-Drehmaschine gemäß dem Oberbegriff des Anspruchs 1.

Mittenantriebs-Drehmaschinen wurden entwickelt, um beide Enden eines Werkstücks in einer Aufspannung zu bearbeiten. In erster Linie handelt es sich hier um zu bearbeitende Wellenteile, die in etwa Werkstückmitte eine Werkstückspannung zulassen. Gegenüber nacheinander folgenden Bearbeitungsschritten entfällt die Zeit für Maschinenhalt, Werkstückentspannen, Werkstückwenden, Neueinspannen und Maschinenlauf. Von besonderer Bedeutung ist auch die erreichbare Koaxialität der beiden Werkstückenden, da das Werkstück nur einmal gespannt wird.

Eine gattungsgemäße Mittenantriebs-Drehmaschine ist aus EP 1 034 881 A1 bekannt. Das Maschinenbett dieser Drehmaschine besitzt zwei Ebenen, eine waagerecht angeordnete und eine schräg angeordnete Ebene. Auf der schräg angeordneten Ebene ist eine Führungsbahn für zwei Kreuzschlitten vorgesehen, während die waagerechte Ebene eine Führungsbahn für zwei Mittenantriebsköpfe aufweist. Die relativen Positionen der Mittenantriebsköpfe und der Kreuzschlitten zueinander sind variabel einstellbar, in dem die Mittenantriebsköpfe und die Kreuzschlitten auf den parallelen Führungsbahnen aneinander vorbeifahrbar sind. Aufgrund dieser Variabilität der Relativpositionen zwischen den Kreuzschlitten und den Mittenantriebsköpfen sind auf dieser Maschine vielfältige Bearbeitungsmöglichkeiten von Werkstücken realisierbar. So können lange Werkstücke gleichzeitig in beide Mittenantriebsköpfe eingespannt werden, wobei eine gleichzeitige Enden- oder Oberflächenbearbeitung möglich ist. Durch Einspannen eines kurzen Werkstücks in einen der beiden angetriebenen Mittenantriebsköpfe kann dieses gleichzeitig an beiden Enden bearbeitet werden.

Diese Mittenantriebs-Drehmaschine sowie auch alle anderen aus dem Stand der Technik bekannten Mittenantriebs-Drehmaschinen sind für ein automatisches Be- und Entladen von Werkstücken konzipiert. Ein derartiges Handling ist aber für den Einsatz im Klein- und Mittelserienbereich unrentabel.

Aufgabe der vorliegenden Erfindung ist es daher, eine Mittenantriebs-Drehmaschine zur Verfügung zu stellen, die ein manuelles Be- und Entladen mit Werkstücken gestattet und somit für den Einsatz im Klein- und Mittelserienbereich geeignet ist.

Erfindungsgemäß wird diese Aufgabe mit einer Mittenantriebsmaschine gelöst, die die Merkmale des Anspruchs 1 aufweist.

Die erfindungsgmäße Maschinenkonzeption bricht vollständig mit dem traditionellen Maschinenbau auf dem Gebiet der Mittenantriebstechnik. Aufgrund der vertikalen Anordnung des Maschinenbetts und der Führung des mindestens einen Mittenantriebskopfes auf der unteren Führungsbahn ist erstmalig ein manuelles Be- und Entladen einer Mittenantriebs-Drehmaschine mit Werkstücken möglich und das auf ergonomisch optimale Weise. Gleichzeitig gestattet das erfindungsgmäße Maschinenkonzept natürlich aber auch eine automatisierte Be- und Entladung.

In weiterer Ausgestaltung der Erfindung ist das Maschinenbett durch eine Stufe in zwei Ebenen unterteilt, wobei auf der von einem Bediener aus betrachtet oberen hinteren Ebene die Führungsbahn für den mindestens einen Kreuzschlitten und auf der unteren vorderen Ebene die Führungsbahn für den mindestens einen Mittenantriebskopf angeordnet ist. Durch die zurückspringende obere Ebene des Maschinenbetts wird Baufreiheit für die Anordnung von Zusatzeinrichtungen, wie z. B. Scheibenrevolver mit großem Durchmesser und damit mit einer Vielzahl von Werkzeugsteckplätzen, oder andere Einrichtungen, wie z. B. Dreh-Fräs-Aggregaten geschaffen, ohne dass diese die vordere Maschinensilhouette überragen. Der Raum unter dem mindestens einen auf der oberen Führungsbahn laufenden Kreuzschlitten wird für die Anordnung einer Antriebswelle für den mindestens einen Mittenantriebskopf benutzt.

Weitere vorteilhafte Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt:
- Fig. 1: einen perspektivischen Blick von schräg oben auf eine schematisch dargestellte Mittenantriebs-Drehmaschine nach einer ersten Ausführungsform der Erfindung,
- Fig. 2: eine Seitenansicht der in Fig. 1 dargestellten Mittenantriebs-Drehmaschine,
- Fig. 3: einen perspektivischen Blick von schräg oben auf eine Mittenantriebs-Drehmaschine nach einer zweiten Ausführungsform der Erfindung.
- Fig. 4: eine Draufsicht auf die Mittenantriebs-Drehmaschine gmäß Fig. 3, und
- Fig. 5: einen perspektivischen Blick von schräg oben auf eine schematisch dargestellte Mittenantriebs-Drehmaschine nach einer dritten Ausführungsform der vorliegenden Erfindung.

Die in der Zeichnung dargestellte Mittenantriebs-Drehmaschine 1 unterscheidet sich in allen drei gezeigten Ausführungsformen lediglich in der Bestückung mit Mittenantriebsköpfen bzw. Werkzeugträgern. Nachstehend werden daher zunächst die allen drei Ausführungsformen gemeinsamen Merkmale erläutert.

Die Mittenantriebs-Drehmaschine 1 besitzt ein Untergestell 2, auf dem ein vertikal ausgerichtetes Maschinenbett 3 angeordnet ist. Das Maschinenbett 3 besitzt eine Stufe 4, wodurch eine vordere untere Ebene 5 und eine hintere obere Ebene 6 des Maschinenbetts 3 gebildet ist. Die untere Ebene 5 und die obere Ebene 6 sind jeweils mit einer Führungsbahn 7 bzw. 8 ausgestattet. Auf der oberen Führungsbahn 8 laufen in den gewählten Ausführungsbeispielen zwei Kreuzschlitten 9 und 10, auf deren Planschlitten 11 bzw. 12 jeweils ein Scheibenrevolver 13 bzw. 14 angeordnet ist. Es ist natürlich auch möglich, einen der Scheibenrevolver 13 durch ein anderes Aggregat, z. B. durch ein Dreh-Fräsaggregat zu ersetzen, wodurch auf der Mittenantriebs-Drehmaschine 1 auch eine Fräs-, Bohr- und Gewindeschneidbearbeitung durchführbar ist. Die Mittenantriebs-Drehmaschine ist bei dieser Bestückung für eine Komplettbearbeitung gerüstet.

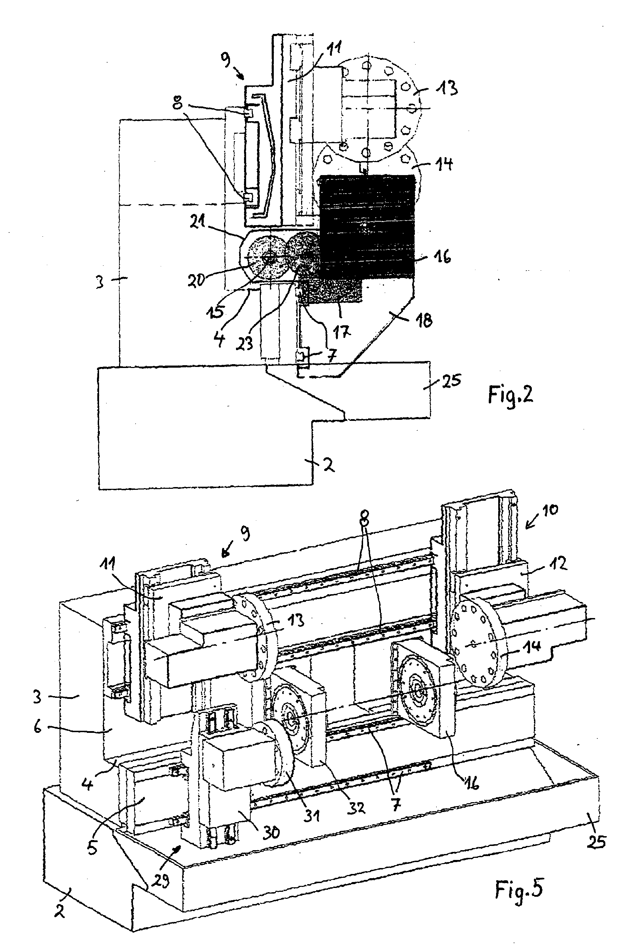

Aus der Seitenansicht gemäß Fig. 2 geht hervor, dass die Scheibenrevolver 13, 14 trotz ihres relativ großen Durchmessers aufgrund der im Maschinenbett 3 vorgesehenen Stufe 4 nicht über die vordere Silhouette der Mittenantriebs-Drehmaschine 1 hinausragen. Der durch die Stufe 4 unterhalb der Kreuzschlitten 9 und 10 gewonnene Raum wird für die Anordnung einer Antriebswelle 15 genutzt, die dem Antrieb mindestens eines Mittenantriebskopfs 16 dient und von einem Antriebsmotor 17 angetrieben wird.

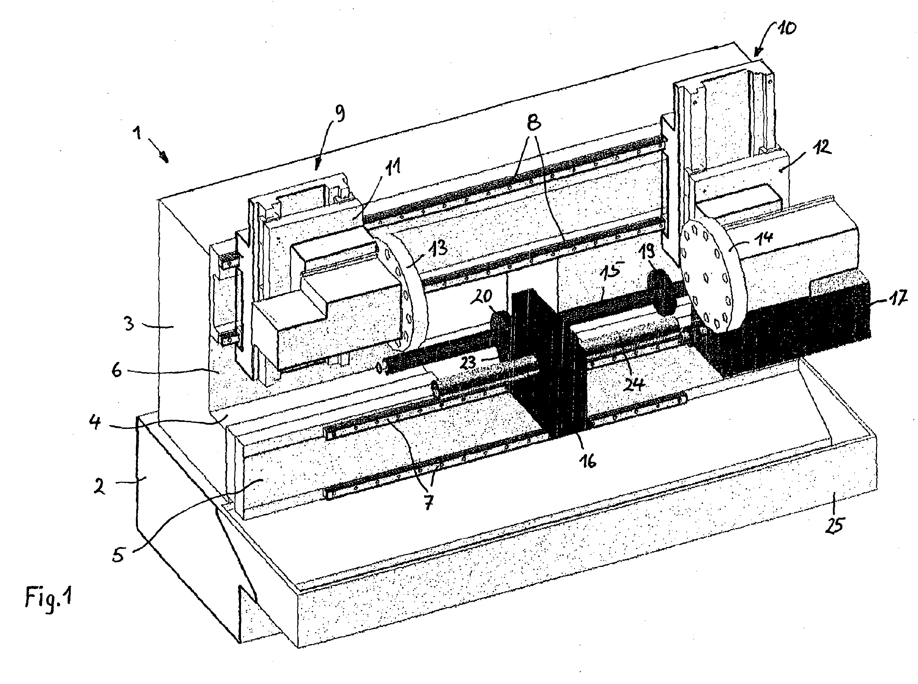

In dem Ausführungsbeispiel gemäß den Figuren 1 und 2 ist ein Mittenantriebskopf 16 vorgesehen, der über einen Schlitten 18 an der unteren Führungsbahn in der Z-Achse verschiebbar geführt ist. In den Figuren 1, 3 und 5 ist der Schlitten 18 bzw. sind die Schlitten 18 der Übersicht halber nicht dargestellt.

Die Antriebswelle 15 ist z. B. als Polygonwelle ausgeführt, auf der Zahnriemenräder 19, 20 angeordnet sind. Das Zahnriemenrad 19 ist über einen nicht dargestellten Zahnriemen mit der Welle des Motors 17 verbunden, so dass dessen Drehmoment auf die Antriebswelle 15 übertragen wird. Das Zahnriemenrad 20 ist dem Mittenantriebskopf 16 zugeordnet. Es sitzt in einem an den Mittenantriebskopf 16 angeflanschtes Gehäuse 21, wie am besten aus Fig. 2 hervorgeht. In diesem Gehäuse 21 ist weiterhin ein Zahnriemenrad 22 kleineren Durchmessers angeordnet, wobei die beiden Zahnrienmenräder 20, 22 über einen aus der Darstellung nicht ersichtlichen Zahnriemen miteinander verbunden sind. Auf gleicher Welle mit dem Zahnriemenrad 22 sitzt innerhalb des Gehäuses 21 ein Zahnrad 23, welches den Mittenantriebskopf 16 antreibt.

Der Mittenantriebskopf 16 ist, wie oben schon beschrieben, längs der Führungsbahn 7 in Z-Richtung verschiebbar. Bei dieser Verschiebung wird das Zahnriemenrad 20 über das Gehäuse 21 mitgenommen, d.h., es verschiebt sich auf der als Polygonwelle ausgeführten Antriebswelle 15, so dass in jeder Position des Mittenantriebskopfes 16 dessen Antrieb gewährleistet ist.

In der Darstellung gemäß Fig. 1 ist ein Werkstück 24 in den Mittenantriebskopf 16 eingespannt. Dieses Werkstück 24 kann mittels der Scheibenrevolver 13, 14 gleichzeitig an beiden Enden stirn- und oberflächenbearbeitet werden. Bei Ersatz eines oder beider Scheibenrevolver 13 bzw. 14 durch ein Dreh-Fräsaggregat wäre es möglich, neben der Drehbearbeitung auch eine Fräs-, Bohr- und/oder Gewindeschneidbearbeitung an den Stirnflächen oder an der Oberfläche des Werkstücks 24 durchzuführen.

Die bei der Bearbeitung anfallenden Späne werden in einer an dem Maschinenuntergestell 2 befestigten Spänefangwanne 25 gesammelt und aus dieser von einem nicht dargestellten Späneförderer abgeführt.

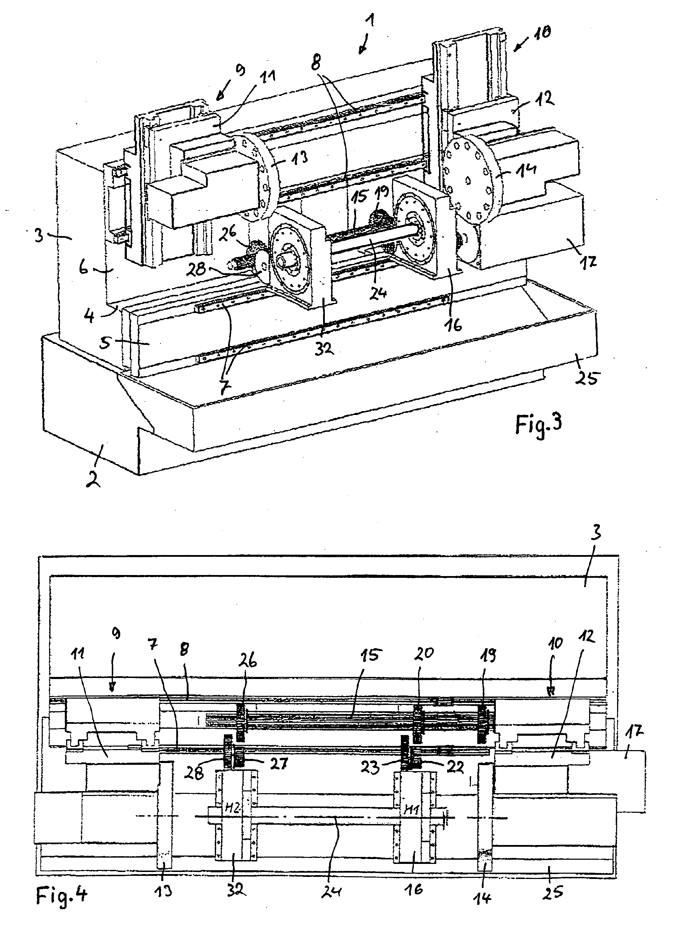

Das Ausführungsbeispiel gemäß den Figuren 3 und 4 unterscheidet sich von dem vorstehend beschriebenen Ausführungsbeispiel dadurch, dass ein weiterer Mittenantriebskopf 32 vorgesehen ist, der ebenfalls auf einen Schlitten 18 an der Führungsbahn 7 geführt ist und separat zum Mittenantriebskopf 16 verschiebbar ist. Der Antrieb dieses Mittenantriebskopfes 32 erfolgt analog zum Mittenantriebskopf 16 über die Antriebswelle 15, ein Zahnriemenrad 26, ein Zahnriemenrad 27, einem Zahnriemen und ein Zahnrad 28.

Die in Fig. 5 gezeigte Mittenantriebs-Drehmaschine 1 unterscheidet sich von der gemäß den Figuren 3 und 4 dadurch, dass zusätzlich auf der Führungsbahn 7 ein weiterer Kreuzschlitten 29 geführt ist, auf dessen Bettschlitten 30 ein Scheibenrevolver 31 kleineren Durchmessers angeordnet ist. Durch diesen zusätzlichen Scheibenrevolver 31 wird die Anzahl der einsetzbaren Werkzeuge erhöht.

Anstelle des zusätzlichen Kreuzschlittens 29 kann auf der Führungsbahn 7 auch ein Reitstock oder eine Lünette angeordnet sein.

Insgesamt wird mit der erfindungsgemäßen Mittenantriebs-Drehmaschine ein modulares Maschinensystem mit Kombinationsmöglichkeiten für eine CNC-Dreh- und Fräsbearbeitung zur Verfügung gestellt, welches sich den technologischen Anforderungen einer gegebenen Werkstückbearbeitung flexibel anpassen lässt.

## Patentansprüche

1. Mittenantriebs-Drehmaschine mit mindestens einem Mittenantriebskopf und mindestens einem Kreuzschlitten, wobei der mindestens eine Mittenantriebskopf und der mindestens eine Kreuzschlitten auf zueinander parallelen, auf einem Maschinenbett angeordneten Führungsbahnen verfahrbar sind, **dadurch gekennzeichnet, dass** das Maschinenbett (3) vertikal angeordnet ist, wobei auf einer oberen Führungsbahn (8) der mindestens eine Kreuzschlitten (9, 10) und auf einer unteren Führungsbahn (7) der mindestens eine Mittenantriebskopf (16, 32) verfahrbar ist.

2. Mittenantriebs-Drehmaschine nach Anspruch 1, **dadurch gekennzeichnet, dass** das Maschinenbett (3) durch eine Stufe (4) in zwei Ebenen (5, 6) unterteilt ist, wobei auf der von einem Bediener aus betrachteten oberen hinteren Ebene (6) die Führungsbahn (8) für den mindestens einen Kreuzschlitten (9, 10) und auf der unteren vorderen Ebene die Führungsbahn (7) für den mindestens einen Mittenantriebskopf (16, 32) angeordnet ist.

3. Mittenantriebs-Drehmaschine nach Anspruch 2, **dadurch gekennzeichnet, dass** in dem zwischen der Stufe (4) und dem mindestens einen Kreuzschlitten (9, 10) gebildeten Zwischenraum eine Antriebswelle (15) für den mindestens einen Mittenantriebskopf (16, 32) angeordnet ist.

4. Mittenantriebs-Drehmaschine nach Anspruch 3, **dadurch gekennzeichnet, dass** die Antriebswelle z. B. als Polygonwelle ausgeführt ist, auf der ein dem mindestens einen Mittenantriebskopf (16, 32) zugeordnetes Zahnriemenrad (20, 26) angeordnet ist, welches auf der Antriebswelle (15) zusammen mit dem mindestens einen Mittenantriebskopf (16, 32) in der Z-Achse verschiebbar ist und der Drehantrieb des mindestens einen Mittenantriebskopfes (16, 32) über einen zwischen dem Zahnriemenrad (20, 26) der Antriebswelle (15) und einem Zahnriemenrad (22, 27) des mindestens einen Mittenantriebskopfes (16, 32) laufenden Zahnriemen erfolgt.

5. Mittenantriebs-Drehmaschine nach einem der vorstehenden Ansprüche, **dadurch gekennzeichnet, dass** auf der Führungsbahn (7) ein weiterer Kreuzschlitten (29) angeordnet ist.

6. Mittenantriebs-Drehmaschine nach einem der vorstehenden Ansprüche 1 - 4, **dadurch gekennzeichnet, dass** auf der Führungsbahn (7) ein Reitstock angeordnet ist.

7. Mittenantriebs-Drehmaschine nach einem der Ansprüche 1 - 4, **dadurch gekennzeichnet, dass** auf der Führungsbahn (7) eine Lünette angeordnet ist.

8. Mittenantriebs-Drehmaschine nach einem der vorstehenden Ansprüche, **dadurch gekennzeichnet, dass** auf einem oder beiden der Kreuzschlitten (9, 10) ein Dreh-Fräs-Aggregat angeordnet ist.
